# EUROPEAN PATENT SPECIFICATION

(11) **EP 3 852 551 B1**
(45) Date of publication and mention of the grant of the patent: **15.01.2025**
(21) Application number: 19790790.0
(22) Date of filing: 19.09.2019
(51) Int. Cl.: A23L 7/117, A23L 7/13, A23L 7/135, A23L 7/161, A23L 7/17, A23L 19/00, A23L 19/12, A23L 19/18

(54) **SNACK AND PRODUCTION PROCESS THEREOF**
SNACK UND VERFAHREN ZUR HERSTELLUNG
SNACK ET PROCÉDÉ DE PRÉPARATION

(30) Priority: 19.09.2018 IT 201800008738
(43) Date of publication of application: 28.07.2021
(73) Proprietor: JOXTY SE, 11000 Nové Mesto - Praha 1 (CZ)
(72) Inventor: GIROLIMETTO, Italo, 35014 Fontaniva (PD) (IT)
(74) Representative: Gislon, Gabriele
(86) International application number: PCT/IB2019/057936
(87) International publication number: WO 2020/058911

(56) References cited:
- WO-A1-2009/149948
- WO-A1-2018/097712
- GB-A- 2 522 232
- IT-A1- PD20 090 371
- JP-B2- 5 571 046
- RU-C2- 2 616 381
- US-A- 3 800 050
- US-A- 6 054 166
- US-A1- 2006 013 940
- US-A1- 2007 243 301
- US-A1- 2008 213 432
- US-A1- 2009 202 700
- US-A1- 2010 215 826
- US-A1- 2018 213 827

## Description

### Technical field

The invention relates to the food field. In particular, the present invention relates to the field of snacks, for example salted snacks, and to the processes for the production thereof.

### Background art

Many types of snacks based on starchy products are known, for example based on potato starch. The known snacks, however, have the problem that for having an appetizing taste they must generally have a relatively high content of salts, fats and sugars.

To date, snacks in which at least one part of the starchy products (for example, potato flour or starch) has been replaced with ingredients deriving from other vegetable ingredients, for example vegetables different from tubers such as, for example, carrot are also known. For producing such snacks, is known the use of vegetables or fruits previously treated and reduced in the form of flour of the vegetable used; thereby it is possible to replace part of the potato flours with vegetable flour and to reduce the amount of starches in the final product. However, the so-obtained products don't have good taste, unless bringing the content of salt, sugar and fats to an analogous or greater level than that of the snacks based on starchy products only.

In summary, the known snacks have, in general, the problem of high content of salts, fats and sugars. On the other hand, the snacks with reduced content of salts, fats, sugars and, more in general, with reduced caloric intake, are usually poor or lacking in taste, aspect and texture characteristics required by the user.

US 2007/0243301 discloses in Example 2 a cracker like pellet product with vegetable inclusions and low-fat weggie snack having a one-third vegetable serving. The amount of vegetable powder in the pellet is in the range from 0 to 30 %. The snack of Example 3 comprises 10% potato powder. A mixture of rice-flour comprising vegetable material in powder form is pre-gelatinized in a preconditioner before feeding the pre-gelatinized product in the extruder.

US 2008/0213432 discloses a snack chip comprising from about 15% to about 60 % of vegetable material and from about 40% to about 65 % of starch material comprising at least about 40% of pre-gelatinized starchy material, water and further optional ingredients. The vegetables can be fresh, frozen, juiced, pureed, hydrated or cooked ones. The snack can be made by combining the vegetable material and dry ingredients with water to form a dough which is sheeted, dried without the use of a heated extruder to form a half product, which is cooked to form the snack chip. The final apparent density of the snack ranges from about 0,3 to 1,1 g/cc.

US 2009/0202700 discloses a snack comprising starch and fruit or vegetable materials. The snack comprises about 12% to about 66% of fruit source solids and from about 34 % to about 88 % of starch material. The snack is prepared by pre-gelatinizing the starch material. The fruits used in the snack are listed in [0033], while the used vegetables materials are reported in [0034]. The fruit and vegetable materials are used in form of puree or fruit juice or dehydrated vegetable materials and powders or vegetable puree.

EP 2117350 describes a process for producing snacks containing "vegetable materials" in the form of small pieces or flour obtained from a pre-gelatinized tapioca starch in the whole or for the most part. Despite this document describes a relatively high theoretical content of vegetable material in small pieces in the final product (i.e. the expanded product), it is sufficiently described only one example with carrot content of about 15%. The final product (snack) obtained from pre-gelatinized flours is anyway very dense, generally about 0.6 - 0.9 g/cc, and thus poorly appetizing.

Therefore, there is the need to provide a snack which in its final form contains a significant amount of vegetable material, having at least palatable taste, with natural tastes and being expanded enough to be appetizing.

### Summary of the invention

Purpose of the present invention is to solve the problems discussed above and to provide a snack with natural tastes and which is appetizing.

Another purpose of the present invention is to provide a snack having high organoleptic properties and having palatable taste.

Still another purpose of the present invention is to provide a production process allowing to obtain a final product having the above discussed characteristics.

These and other purposes are achieved by a process of producing a snack according to claim 1. The snack of the potato chip type as obtainable with the process of claim 1 according to the present invention is characterized in claim 4.

### Detailed description

In the following description, the characteristics of the present invention will be described with reference to exemplary embodiments; however, each of the characteristics herein described can be combined with one or more other characteristics herein described, providing further embodiments of the present invention. Such embodiments must be considered described by the present description.

As mentioned above, an object of the present invention is a snack comprising at least one starchy material and macroparticles of at least one vegetable material. Preferably, the vegetable material is selected among vegetables and fruits.

According to an aspect of the present invention, at least part of the macroparticles of vegetable material is visible to the naked eye; furthermore, in the snack of the present invention, the macroparticles of vegetable material are dispersed in the starchy material.

As used herein, the term "starchy material" is referring to a material having high starch content, i.e. a content of at least 30 g starch on 100 g material before the beginning of the production process of a snack. Examples of starchy material are tubers, for example potato and Jerusalem artichokes, cereals (for example durum wheat, wheat, kamut, rye, barley, spelled, rice, corn, millet, sorghum and oats) other plants considered pseudo-cereals (i.e. plants which, although not belonging to the Gramineae family, can be used for food use, such as buckwheat, quinoa, amaranth and chia) and the materials derived therefrom such as, for example flours, ground and extracted products. Preferred flour is the potato flour, or potato starch.

In embodiments of the present invention, one or more starchy ingredients can be used, preferably in the form of flour, ground material or their mixtures, to produce a snack according to the present invention.

As used herein, the term "macroparticles of vegetable material" refers to corpuscles or portions with reduced size, but visible to the naked eye, of at least one vegetable material, preferably different from the starchy material discussed above. According to the present description, macroparticles visible to the naked eye can be single corpuscles, i.e. single monolithic or substantially monolithic particles, or else particle agglomerates the size of which are smaller than those of the aggregate, or else colored areas obtained from the disintegration of the vegetable material during the processing to achieve the final snack; such disintegration occurs for example, during the expansion step of the gelatinized product.

In embodiments, the final product, i.e. the snack after expansion by cooking, has a lower number of macroparticles visible to the naked eye than the dried product from which it has been obtained.

Examples of "vegetable material" according to the present invention are vegetables and fruits. Examples of vegetables suitable to be used in the present invention are carrots, broccoli, cauliflower, celery, bell peppers, tomatoes, zucchini, pumpkin, spinach, beetroot, sugar beet, asparagus, fennel, onion, spring onion, leek, garlic, eggplant, artichokes, aromatic vegetables such as mint, rosemary, sage and their mixtures. Examples of fruits usable in the present invention are apples, pears, lime, lemon and citrus fruits, apricots, peaches, bananas, cherries, grapes, strawberries, blueberries, blackberries, raspberries, melon, watermelon, cocoa and coffee and their mixtures. Advantageously the coffee is added to the starchy material as unroasted coffee beans, i.e. without having been previously toasted.

Advantageously, two or more vegetable materials can be combined and used in making the same snack.

For example, a first vegetable material can be used as vegetable base material, i.e. vegetable material adapted to provide a specific flavor and/or aspect and/or nutritional value to the finished product, whereas a second vegetable material can be used to enrich the flavor in the finished product, and/or to provide one or more aromas to the snack.

Examples of combinations of two vegetable materials are carrot and onion, sugar beet and mint, bell pepper and spring onion, pumpkin and rosemary, spinach and garlic.

When two or more vegetable materials are used, the snack comprises macroparticles visible to the naked eye of at least one of the vegetable materials used, for example, of at least the vegetable base material.

According to embodiments, the macroparticles of vegetable material are at least in part macroparticles of a vegetable material used in the process of the invention in the form of untreated vegetable.

In other words, according to embodiments, the macroparticles of vegetable material are at least in part macroparticles deriving from untreated vegetable material.

As used herein, the term "untreated" refers to a vegetable material, for example vegetables or fruits, in which the initial state of the fresh vegetable material has not been substantially altered. In other words, a vegetable or fruit is considered "deriving from untreated vegetable material" if, prior to being used in the process of the invention, it has not been subjected to processes which have altered its original characteristics such as, for example, amount of fibers, water content, protein content, etc.

In particular, the term "untreated" refers to a fresh and/or raw vegetable material, for example fresh and/or raw vegetables or fruits. For example, fresh vegetables can be used in the process of the invention. Advantageously, the vegetable material is added to the matrix after being washed, if necessary cut into coarse pieces. The material is not necessarily treated except, if necessary, having been deprived of the seeds or other parts which give problems during extrusion; the vegetable material is generally still provided with own peel which will provide part of the visible macroparticles in the final product.

For example, carrot macroparticles can be included inside a snack according to the invention by using, in the production process, whole raw carrots. For example, a fresh and raw carrot can be washed, optionally cut into coarse pieces, and directly used in the production process of the snack. At the end of the production process of the snack, a snack will be obtained comprising carrot macroparticles, visible to the naked eye, deriving from an untreated carrot.

According to embodiments, the macroparticles of vegetable material can be at least in part macroparticles of a treated vegetable material.

Examples of treated vegetable materials are lyophilized, dried vegetable materials and their mixtures.

According to embodiments, in addition to the untreated vegetable material described above, in the snack there can be vegetable material in the form of macroparticles of a treated vegetable material, for example by lyophilization.

Advantageously, the snack according to the present invention has high organoleptic and nutritional properties, but also an intense and palatable taste.

In fact, it was surprisingly observed that the inclusion of macroparticles in the snack of at least one vegetable material, for example a vegetable, dispersed in the starchy material, and at least in part visible to the naked eye, allows to obtain a snack with an optimal taste, a particularly appetizing aspect and in which the original flavor of the vegetable material contained therein can be recognized. Such result can allow to reduce the content of salts, fats and sugars of the snack as the product is very much appetizing per se. In embodiments, there can be an extremely low content of salt, fats and sugars, for example in the order of 0.5% by weight salt and 1.5% by weight oil in the semi-finished product (pellet), before toasting or frying.

Typically, the snack according to the invention can have a content of iron (Fe), total phosphorus (P) magnesium (Mg) and potassium (K) in the following ranges:
iron (Fe) between 30 and 80 mg/kg, preferably between 40 and 70 mg/kg, measured according to the UNI EN 13805:2014 + UNI EN 15763:2010 standard regulations;
total phosphorus (P) between 700 and 1700 mg/kg, preferably between 800 and 1500 mg/kg, measured according to the UNI EN 13805:2014 + UNI EN 15763:2010 standard regulations;
magnesium (Mg) between 300 and 900 mg/kg, preferably between 400 and 800 mg/kg, measured according to the UNI EN 13805:2014 + UNI EN 15763:2010 standard regulations;
potassium (K) between 5000 and 13000 mg/kg, preferably between 7000 and 1200 mg/kg, measured according to the UNI EN 13805:2014 + UNI EN 15763:2010 standard regulations.

The values of iron (Fe), total phosphorus (P) magnesium (Mg) and potassium (K) mentioned above have to be considered independent of each other.

For example, a snack according to the invention, for example comprising spinach macroparticles, after the expansion by toasting (baking), can have a content of iron (Fe) between 50 mg/kg and 75 mg/kg, total phosphorus (P) between 1000 mg/kg and 1700 mg/kg, magnesium (Mg) between 500 mg/kg and 800 mg/kg, and potassium (K) between 8000 mg/kg and 13000 mg/kg, measured as mentioned above.

In another example, a snack according to the invention, for example comprising spinach macroparticles, after an expansion by frying, can have a content of iron (Fe) between 30 mg/kg and 50 mg/kg, total phosphorus (P) between 700 mg/kg and 1200 mg/kg, magnesium (Mg) between 300 mg/kg and 600 mg/kg, and potassium (K) between 5000 mg/kg and 9000 mg/kg, measured as mentioned above. According to embodiments, the amount by weight of the vegetable material in the snack is between 20% and 50%, preferably between 30% and 50%, more preferably between 35% and 45%. For example, in embodiments, the snack of the present invention can contain about 38% and up to 44% by weight of vegetable material, with respect to the total weight of the snack.

As mentioned above, according to an aspect of the present invention, at least part of the macroparticles of vegetable material of the snack is visible to the naked eye.

In other words, looking at the snack, even intact, from the outside, it is possible to see, to the naked eye, at least part of the macroparticles of vegetable material comprised in the snack. For that purpose, the product has macroparticles made of vegetable material and/or colored areas obtained by the destruction of the vegetable material whose size is at least 0.1 mm, preferably at least 0.5 mm, more preferably at least 1 mm; in other words, the size of at least part of the macroparticles in the final product is at least 0.1 mm, preferably at least 0.5 mm, more preferably at least 1 mm.

Advantageously, this allows the consumer to immediately recognize the actual presence of at least one vegetable material which is not deriving from flours (for example, carrot or sugar beet corpuscles), and to be able to appreciate the high content of such vegetable material inside the snack.

According to the present invention, the macroparticles of vegetable material are dispersed in the starchy material. In other words, the macroparticles are kneaded with the starchy material, i.e., are included inside the dough used to make the snack.

According to embodiments, at least part of the macroparticles of vegetable material in the snack has dimensions, in general a length, between 5 mm and 0.1 mm, preferably between 4 mm and 0.5 mm, more preferably between 3 mm and 1 mm. In embodiments, in the snack according to the present invention (in particular, in a single piece) there are at least 3, preferably at least 4, macroparticles visible to the naked eye of size at least of 0.5 mm, preferably at least 1 mm, more preferably at least 2 mm, even more preferably at least 3 mm. In embodiments, in the snack according to the present invention (in particular, in a single piece,) there are at least 10 macroparticles visible to the naked eye, of which at least 4 macroparticles have size of at least 1 mm, preferably at least 2 mm, more preferably at least 3 mm.

As mentioned above, macroparticles visible to the naked eye can be single corpuscles, i.e. single particles, or else particle agglomerates having smaller size, or else colored areas obtained by the destruction of the vegetable material, for example, during the expansion step. The original flavor of the vegetable material, for example a vegetable, inside the snack, is particularly intense and recognizable.

As mentioned above, according to an embodiment of the present invention, at least part of the macroparticles inside the snack derives from a fresh, i.e. untreated, vegetable material, contrary to the known technique which provides the use of flours. The matrix of starchy material is pre-gelatinized during the extruding step, forming a structure able to expand during the cooking step (e.g. in the oven or by frying).

Advantageously, the use of fresh vegetable materials, for example fresh vegetables or fruits, allows to obtain a snack having high nutrient content, intense and palatable taste also with low content of salts, fats and sugars. Advantageously, the snack according to the invention turns out to be particularly crunchy, however without presenting an unpleasant level of hardness to chewing.

An instrumental evaluation of the texture has been carried out, in order to evaluate the crunchiness and the hardness of the snack of the invention. The same analyses have been carried out on an analogous snack, free from macroparticles of vegetable material. The instrumental evaluation of the texture is a consolidated analytical practice which allows to express sensorially perceived properties (to the touch, palatability) in a quantitative way, and to investigate the structure properties of the food materials (TEXTURE IN FOODS (2004). B. M. McKenna, David Kilcast (eds), Woodhead Publishing).

The analysis has been carried out by TEXTURE ANALYZER (TAXTplus, Stable Micro System).

Herein below are the test conditions:
PROBE: Ottawa Cell with wire plate code A/wir
TEST MODE: Compression
PRE-TEST SPEED: 2 mm/s
TEST SPEED: 2 mm/s
POST-TEST SPEED: 10 mm/s
TRIGGER FORCE: 250 g
DATA ACQUISITION: 200 PPS

The Ottawa cell is a parallelepiped with a grate at the bottom. In the Ottawa cell a sample mass having constant weight (10 g) is loaded. The material is then compressed by a piston. The end-of-test criterion was: 33% deformation of the precompressed mass to uniform the loading surface.

For each sample 5 replicas of the test were carried out.

The test allowed to determine the following parameters:
- compression work (g x mm), which expresses the sensory characteristic of crunchiness;
- apparent elasticity index (g/mm), which expresses the sensory characteristic of hardness perceived by chewing/breaking.

The results obtained showed that the snack according to the invention is crunchier and, at the same time, less hard than the analogous products free from vegetables, i.e. free from macroparticles of vegetable material.

Furthermore, the use of fresh vegetable materials, for example fresh vegetables or fruits, allows to reduce the amount of water needed for the production process. In addition, since the vegetable material is not subjected to preliminary treatments (for example, drying) the energy consumption of the production process is reduced.

Another object of the present invention is a production process of a snack according to the present invention, comprising the following steps:
a. preparing a mixture comprising at least one starchy material and macroparticles of at least one vegetable material, in which at least part of said macroparticles is visible to the naked eye,
b. gelatinizing the starchy material present in said mixture in the presence of said macroparticles, to obtain a gelatinized product;
c. drying the gelatinized product, to obtain a dried product; and
d. expanding the dried product, preferably by frying or toasting.

The toasting generally occurs in oven. Advantageously, the process of the present invention allows to avoid a step of pre-gelatinizing the starch in the starchy material, thus reducing the energy consumption with respect to known processes.

In fact, as mentioned above, according to an aspect of the present invention, the step of gelatinizing the starchy material is directly carried out on the mixture of starchy material and macroparticles of vegetable material. In other words, the step of gelatinizing the starch is carried out in the presence of the macroparticles of vegetable material, to obtain a gelatinized product. Advantageously, such gelatinized product will include macroparticles of a vegetable material, preferably at least part deriving from an untreated vegetable material, i.e. a fresh vegetable material before the step of gelatinizing.

According to embodiments, the macroparticles are at least in part macroparticles of an untreated vegetable material.

Advantageously, the use of untreated vegetable material, allows to reduce the production time, with respect to known processes. In fact, the use of fresh vegetable material allows to avoid the pre-treatment of the vegetable material, for example the addition of water to a lyophilized material before mixing it with a starchy material.

According to embodiments, the mixture of at least one starchy material and macroparticles of at least one vegetable material can be obtained and heated by techniques known per se.

According to embodiments, the macroparticles are at least in part macroparticles of an untreated vegetable material. In addition or in alternative to the macroparticles of untreated vegetable material, the mixture can comprise macroparticles of treated vegetable material.

For example, the mixture can comprise one or more lyophilized, dried vegetable materials, or their mixtures.

For example, an untreated vegetable material, for example a fresh vegetable, can be chopped and mixed to a flour, for example potato flour, optionally by adding water, to obtain a mixture comprising a starchy material (i.e. the potato flour) and macroparticles of the vegetable material. The so-obtained mixture is gelatinized according to known techniques, for example by boiling or extrusion. This way, a gelatinized product containing macroparticles of at least one vegetable material can be obtained. A suitable gelatinizing technique is to extrude the mixture described above, possibly by heating it, until obtaining the required gelatinization of the starch.

The vegetable material in said mixture is present in an amount between 25% and 65% by weight, preferably between 30% and 55% by weight, more preferably between 32% and 48% by weight with respect to the weight of the mixture.

The step of gelatinizing the starch present in the mixture comprises an extruding step, optionally an extruding and heating step. The heating can be obtained by friction of the mixture in a suitable extrusion cylinder. The extrusion and extrusion-heating (i.e. the cooking by extrusion) are processes known per se.

In this case, advantageously, the vegetable material, preferably fresh, i.e. preferably untreated, can be added with at least one starchy material (for example, one or more tubers and/or cereals flours), and optionally water, inside the extruder.

Advantageously, when the vegetable material is at least in part a fresh vegetable material, i.e. untreated, such fresh vegetable material will be able to be added inside the extruder after being washed and possibly cut into coarse pieces, without the need of being preliminary treated and/or preliminary chopped. In fact, advantageously, the reduction of the vegetable material to macroparticles can occur inside the extruder, i.e. during the extruding step.

For example, a carrot will be able to be added raw, intact, or else, optionally, cut into pieces in the extruder. Advantageously, the size of such pieces is reduced during the extrusion process, for example during the cooking-extrusion process.

According to embodiments of the process of the present invention, the step of extruding comprises a step of reducing the size of said macroparticles made of vegetable material.

For example, in embodiments, the extruding step allows to obtain macroparticles made of vegetable material whose size is at least 3 mm, preferably at least 4 mm, more preferably at least 5 mm.

According to embodiments, the step of gelatinizing is carried out at a temperature between 80°C and 150°C, preferably between 110°C and 140°C, more preferably between 120°C and 130°C.

According to embodiments, the step of gelatinizing is carried out for a time between 15 minutes and 75 minutes, preferably between 30 minutes and 60 minutes, more preferably between 40 minutes and 50 minutes.

Advantageously, the gelatinizing step can be carried out for a time between 30 seconds and 120 seconds, at a suitable temperature to obtain the starch gelatinization. Since the gelatinizing step comprises an extruding step, the production times of the snack are significantly reduced.

Times and temperatures of the gelatinizing step (for example, of the hot extrusion step) will be able to be adjusted according to the components used in the mixture and/or the technique used to carry out such gelatinizing step.

For example, times and temperatures will be able to be adjusted in relation to the amount of untreated vegetable material (i.e. fresh) in the mixture, and/or the type of starchy material used.

At the end of the gelatinizing step, preferably the extruding step, more preferably the cooking-extruding step, a gelatinized product is obtained. Such gelatinized product is an unexpanded gelatinized product, i.e. which has not been subjected to expansion (for example has not been fried or toasted). The starch gelatinization is a process known per se.

According to an aspect of the present invention, the gelatinized product comprises macroparticles of at least one vegetable material, in which at least part of the macroparticles of vegetable material is visible to the naked eye, and such macroparticles are dispersed in the starchy material. Preferably, at least part of the macroparticles is deriving from at least one untreated vegetable material, i.e. derives from at least one vegetable material which has been subjected to the gelatinizing step in the untreated form, i.e. fresh.

The gelatinized product can be subsequently dried and expanded, for example through frying or toasting, to give a finished product, i.e. a snack.

The gelatinized product, optionally dried at least in part, can be subsequently preserved and expanded. For example, the gelatinized product, optionally dried at least in part, can be packed and delivered to whom will carry out the final processing, until obtaining the final product, i.e. a snack.

According to embodiments, the process of the present invention further comprises a step of reducing the thickness of said gelatinized product. Optionally, such gelatinized product can be dried in part before the step of reducing the thickness.

The gelatinized product, which comprises macroparticles of at least one vegetable material, can be treated with techniques known per se with the purpose of obtaining a thickness reduction of such gelatinized product.

The thickness of the gelatinized product can be reduced through techniques known per se. Known techniques are for example those described in the Italian Paten Application ITPD20090371, herein incorporated for reference. In particular, the Italian Paten Application ITPD20090371 describes a hot calendering process of a gelatinized product, allowing to obtain a thickness reduction of such gelatinized product. The calendering step is described in detail, for example, in the steps herein incorporated for reference from page 8 raw 21 to page 10 raw 4 of the mentioned Italian Paten Application.

For example, the preferably extruded gelatinized product can have a thickness between 0.8 mm and 1.5 mm, preferably between 0.9 mm and 1.3 mm, more preferably between 1 mm and 1.2 mm.

For example, the thickness of gelatinized product can be reduced to a size between 0.4 and 0.9 mm, preferably between 0.5 mm and 0.8 mm, more preferably between 0.6 mm and 0.8 mm.

According to embodiments, in the step of reducing the thickness of the gelatinized product, the thickness of such gelatinized product is reduced so as to obtain a thickness reduction between 10% and 80%, preferably between 40% and 60% with respect to the initial thickness.

The unexpanded gelatinized product obtained according to the process of the present invention comprises at least one starchy material and macroparticles of a vegetable material. In particular, in the unexpanded gelatinized product, the macroparticles of vegetable material are dispersed in the starchy material and at least part of said macroparticles is visible to the naked eye.

A portion of unexpanded gelatinized product whose size is 4.8 cm² comprises at least 10 macroparticles of vegetable material, or colored areas obtained from vegetable material, visible to the naked eye.

Depending on the vegetable material used, a portion size of unexpanded gelatinized product of 4.8 cm² comprises up to 40 macroparticles of vegetable material, or colored areas obtained from vegetable material, visible to the naked eye, the size of which at least 3 or 4 macroparticles is bigger or equal to 2 mm, even more preferably bigger or equal to 3 mm. In embodiments, the weight of the snack, i.e. the weight of a single piece (i.e. the final product ready for consumption) is between 0.7 g and 1.5 g. In embodiments, the size of at least part of the macroparticles of the vegetable material inside the unexpanded gelatinized product changes during the expansion step.

However, in general a piece having the aforementioned weight preferably contains macroparticles visible to the naked eye, of which at least 2 or 3 macroparticles have size bigger or equal to 2 mm, even more preferably bigger or equal to 3 mm.

According to the present description, by "unexpanded gelatinized product" we refer to a semi-finished product, for example a pellet.

According to embodiments, the macroparticles of unexpanded vegetable material are at least in part macroparticles of an untreated vegetable material, i.e. are at least in part deriving from a fresh vegetable material. The unexpanded gelatinized product is dried at least in part.

As mentioned above, the gelatinized product obtained at the end of the step of gelatinizing the starch of the mixture comprising at least one starchy material and macroparticles of a vegetable material is dried to obtain a dried product. The drying can be carried out by known techniques.

In the following step of the process of the invention, the dried product is thus expanded so as to obtain the finished product, i.e. a snack. The expansion can be carried out by known techniques, for example by frying or toasting. The expansion is preferably carried out at a temperature between 200°C and 180°C, preferably at a temperature of about 190°C.

We want to point out that the process of the present invention allows to obtain an expanded final product, which comprises high amounts of vegetable material as macroparticles, having density dramatically lower than the density of the products known in the art.

The apparent density of the finished product is between 0.04 and 0.08 g/cc (40 and 80 g/liter), and preferably is between 0.04 and 0.065 g/cc (40 and 65 g/liter).

The apparent density of the finished product can be measured by methods known in the art. In particular, the apparent density of the product can be measured, for example, as follows:
A cylinder with an internal volume of three liters is provided, having a diameter of 150 mm and having a reference mark indicating the level corresponding to the volume of three liters.

Such cylinder is filled with still hot finished product (preferably at a temperature of about 185°C). The cylinder containing the finished product is vibrated for at least 30 seconds. This way the snacks contained in the cylinder settle at the reference mark level of the three liters on the cylinder. Furthermore, this way, the interstitial spaces remaining between a snack and the other are substantially negligible, and do not substantially affect the measurement. The possible excess product, i.e. exceeding the reference mark level, is discarded. The product inside the cylinder is thus weighed and its apparent density is calculated by dividing the weight of the finished product by the volume it occupies.

Another known method which can be used for determining the apparent density according to the invention is that described in the scientific paper "Sandra Segnini, Franco Pedreschi & Petr Dejmek (2004) Volume Measurement Method of Potato Chips, International Journal of Food Properties, 7:1, 37-44, DOI:10.1081/JFP-120022494". In particular, the measurement method of the apparent density is described on page 39 of the mentioned publication.

Note that different methods can provide different point results, which are however substantially equivalent and, in any case, comprised in the ranges herein described.

The apparent density of the finished product is between about 0.04 and about 0.08 g/cc (about 40 and about 80 g/liter), and preferably can be between about 0.04 and about 0.065 g/cc (about 40 and about 65 g/liter).

## Claims

1. A process of producing a snack of the potato chip type, comprising at least one starchy material and macroparticles of at least one vegetable material, preferably selected from vegetables and fruits, wherein said macroparticles are dispersed in said starchy material, comprising the following steps:
a. preparing a mixture comprising at least one starchy material and macroparticles of at least one vegetable material, wherein said vegetable material in said mixture is in an amount between 25% and 65% weight with respect to the weight of the mixture, at least part of said macroparticles is visible to the naked eye, wherein said macroparticles are macroparticles of a fresh and/or raw untreated vegetable material,
b. gelatinizing the starch present in said mixture, in the presence of said macroparticles, to obtain a gelatinized product, wherein the said step of gelatinizing comprises a step of extruding, preferably of hot extrusion, of said mixture;
c. drying said gelatinized product to obtain a dried product; and
d. expanding said dried product by frying or toasting to provide the food snack, wherein at least part of said macroparticles of the vegetable materials in the food snack obtained in step d) are visible to the naked eye and the food snack obtained in step d) has an apparent density comprised between 0,04 and 0,08 g/cc (40-80 g/l).

2. A process according to claim 1, wherein said vegetable material in said mixture is in an amount between 30% and 65% by weight, preferably between 38% and 50% by weight with respect the weight of the mixture.

3. A process according to any one of claims 1 or 2, further comprising a step of reducing the thickness of said gelatinized product.

4. A food snack of the potato chip type as obtainable with the process of any of claims 1 to 3, comprising at least one starchy material and macroparticles of at least one vegetable material preferably selected from vegetables and fruits, wherein at least part of said macroparticles is visible to the naked eye and the amount by weight of said vegetable material is between 20% and 50% by weight of the product, wherein said macroparticles are dispersed in said starchy material, **characterized in that** the apparent density of said snack is between 0,04 and 0,08 g/cc (40-80 g/l).

5. The food snack according to claim 4, wherein the size of at least part of said macroparticles of vegetable material is bigger than 2 mm.

6. The food snack according to claim 4 or 5, wherein the amount by weight of said vegetable material is between 30% and 50%, preferably between 35% and 45% by weight of the final product.

7. The food snack according to any previous claim, wherein the apparent density of said snack is comprised between 0.04 and 0.065 g/cc (40 and 65 g/l).

8. The food snack according to any previous claim, wherein at least part of said macroparticles has at least one size between 5 mm and 0,1 mm, preferably between 5 mm and 1,5 mm, more preferably between 5 mm and 3 mm.

9. The food snack according to any previous claim, wherein
the size of at least two of said macroparticles is greater than or equal to 2 mm, preferably greater than or equal to 3 mm.

10. The food snack, according to any one of claims 4 to 9, wherein said vegetables are selected among carrots, broccoli, cauliflowers, celery, bell peppers, tomatoes, zucchinis, pumpkin, spinach, beetroot, asparagus, fennel, onion, eggplant, artichokes and their mixtures.

11. The food snack, according to any one of claims 4 to 9, wherein said fruits are selected from apples, pears, lime, lemon and citrus fruits, apricots, peaches, bananas, cherries, grapes, strawberries, blueberries, blackberries, raspberries, melon, watermelon, cocoa, coffee and their mixtures.

## Patentansprüche

1. Verfahren zur Herstellung eines Snacks vom Typ Kartoffelchips, umfassend mindestens ein stärkehaltiges Material und Makroteilchen aus mindestens einem pflanzlichen Material, vorzugsweise ausgewählt aus Gemüse und Früchten, wobei die Makroteilchen in dem stärkehaltigen Material dispergiert sind, umfassend folgende Schritte:
a. Bereitstellen eines Gemischs, das mindestens ein stärkehaltiges Material und Makroteilchen aus mindestens einem pflanzlichen Material umfasst, wobei das pflanzliche Material in dem Gemisch in einer Menge zwischen 25 und 65 Gew.-%, bezogen auf das Gewicht des Gemischs, vorliegt, wobei mindestens ein Teil der Makroteilchen mit bloßem Auge sichtbar ist, wobei die Makroteilchen Makroteilchen eines frischen und/oder rohen unbehandelten pflanzlichen Materials sind,
b. Gelatinieren der in der Mischung vorhandenen Stärke in Gegenwart der besagten Makroteilchen, um ein gelatiniertes Produkt zu erhalten, wobei der Schritt des Gelatinierens einen Schritt des Extrudierens, vorzugsweise des Heißextrudierens, der Mischung umfasst;
c. Trocknen des gelatinierten Produkts, um ein getrocknetes Produkt zu erhalten; und
d. Expandieren des getrockneten Produkts durch Braten oder Toasten, um den Nahrungsmittelsnack zu erhalten,
wobei zumindest ein Teil der Makroteilchen der pflanzlichen Materialien in dem in Schritt d) erhaltenen Nahrungsmittelsnack mit dem bloßen Auge sichtbar ist und der in Schritt d) erhaltene Nahrungsmittelsnack eine Rohdichte zwischen 0,04 und 0,08 g/cc (40-80 g/l) aufweist.

2. Verfahren nach Anspruch 1, wobei das pflanzliche Material in der Mischung in einer Menge zwischen 30 und 65 Gew.-%, vorzugsweise zwischen 38 und 50 Gew.-%, bezogen auf das Gewicht der Mischung, vorliegt.

3. Verfahren nach einem der Ansprüche 1 oder 2, ferner umfassend einen Schritt zur Verringerung der Dicke des gelatinierten Produkts.

4. Nahrungsmittelsnack vom Typ Kartoffelchips, der mit dem Verfahren nach einem der Ansprüche 1 bis 3 herstellbar ist, umfassend mindestens ein stärkehaltiges Material und Makroteilchen aus mindestens einem pflanzlichen Material, vorzugsweise ausgewählt aus Gemüse und Früchten, wobei zumindest ein Teil der Makroteilchen mit bloßem Auge sichtbar ist und die Gewichtsmenge des pflanzlichen Materials zwischen 20 und 50 Gew.-% des Produkts beträgt, wobei die Makroteilchen in dem stärkehaltigen Material dispergiert sind, **dadurch gekennzeichnet, dass** die Rohdichte des Snacks zwischen 0,04 und 0,08 g/cc (40-80 g/l) liegt.

5. Nahrungsmittelsnack nach Anspruch 4, wobei die Größe von mindestens einem Teil der Makropartikel aus pflanzlichem Material größer als 2 mm ist.

6. Nahrungsmittelsnack nach Anspruch 4 oder 5, wobei die Gewichtsmenge des pflanzlichen Materials zwischen 30 % und 50 %, vorzugsweise zwischen 35 % und 45 %, des Endprodukts beträgt.

7. Nahrungsmittelsnack nach einem der vorhergehenden Ansprüche, wobei die Rohdichte des Snacks zwischen 0,04 und 0,065 g/cc (40 und 65 g/l) liegt.

8. Nahrungsmittelsnack nach einem der vorhergehenden Ansprüche, wobei zumindest ein Teil der Makroteilchen mindestens eine Größe zwischen 5 mm und 0,1 mm, vorzugsweise zwischen 5 mm und 1,5 mm, noch bevorzugter zwischen 5 mm und 3 mm aufweist.

9. Nahrungsmittelsnack nach einem der vorhergehenden Ansprüche, wobei
die Größe von mindestens zwei der Makroteilchen größer als oder gleich 2 mm, vorzugsweise größer als oder gleich 3 mm ist.

10. Nahrungsmittelsnack nach einem der Ansprüche 4 bis 9, wobei die Gemüse unter Karotten, Brokkoli, Blumenkohl, Sellerie, Paprika, Tomaten, Zucchini, Kürbis, Spinat, Rote Bete, Spargel, Fenchel, Zwiebeln, Auberginen, Artischocken und deren Mischungen ausgewählt sind.

11. Nahrungsmittelsnack nach einem der Ansprüche 4 bis 9, wobei die Früchte ausgewählt sind aus Äpfeln, Birnen, Limetten, Zitronen und Zitrusfrüchten, Aprikosen, Pfirsichen, Bananen, Kirschen, Trauben, Erdbeeren, Blaubeeren, Brombeeren, Himbeeren, Melonen, Wassermelonen, Kakao, Kaffee und deren Mischungen.

## Revendications

1. Un procédé de production d'un snack du type chips, comprenant au moins une matière amylacée et des macroparticules d'au moins une matière végétale, de préférence sélectionnée parmi légumes et fruits, dans lequel lesdites macroparticules sont dispersées dans ladite matière amylacée, comprenant les étapes suivantes:
a. préparer un mélange comprenant au moins une matière amylacée et des macroparticules d'au moins une matière végétale, dans lequel ladite matière végétale dans ledit mélange est d'une quantité comprise entre 25% et 65% en poids par rapport au poids du mélange, au moins une partie desdites macroparticules est visible à l'œil nu, dans lequel lesdites macroparticules sont des macroparticules d'une matière végétale fraîche et/ou d'une matière végétale fraîche et non traitée,
b. gélatiniser l'amidon présent dans ledit mélange, en présence desdites macroparticules, afin d'obtenir un produit gélatinisé, dans lequel ladite étape de gélatinisation comprend une étape d'extrusion, de préférence d'une extrusion à chaud, dudit mélange;
c. sécher ledit produit gélatinisé afin d'obtenir un produit séché; et
d. étendre ledit produit séché par friture ou grillage pour fournir ledit snack alimentaire,
dans lequel au moins une partie desdites macroparticules des matières végétales dans le snack alimentaire obtenu dans l'étape d) est visible à l'oeil nu et le snack alimentaire obtenu dans l'étape d) a une densité apparente comprise entre 0,04 et 0,08 g/cc (40-80 g/1).

2. Un procédé selon la revendication 1, dans lequel ladite matière végétale dans ledit mélange est d'une quantité comprise entre 30% et 65%, de préférence entre 38% et 50%, en poids par rapport au poids du mélange.

3. Un procédé selon l'une quelconque des revendications 1 ou 2, comprenant en outre une étape de réduire l'épaisseur dudit produit gélatinisé.

4. Un snack alimentaire du type chips tel que obtenu par le procédé selon l'une quelconque des revendications 1 à 3, comprenant au moins une matière amylacée et des macroparticules d'au moins une matière végétale, de préférence sélectionnée parmi légumes et fruits, dans lequel au moins une partie desdites macroparticules est visible à l'oeil nu et la quantité en poids de ladite matière végétale est comprise entre 20% et 50% en poids du produit, dans lequel lesdites macroparticules sont dispersées dans ladite matière amylacée, **caractérisé en ce que** la densité apparente dudit snack est comprise entre 0,04 et 0,08 g/cc (40-80 g/l).

5. Le snack alimentaire selon la revendication 4, dans lequel la dimension d'au moins une partie desdites microparticules de matière végétale est supérieure à 2 mm.

6. Le snack alimentaire selon la revendication 4 ou 5, dans lequel la quantité en poids de ladite matière végétale est comprise entre 30% et 50%, de préférence entre 35% et 45%, en poids du produit final.

7. Le snack alimentaire selon quelconque revendication précédente, dans lequel la densité apparente dudit snack est comprise entre 0,04 et 0,065 g/cc (40 et 65 g/1).

8. Le snack alimentaire selon quelconque revendication précédente, dans lequel au moins une partie desdites macroparticules a au moins une dimension comprise entre 5 mm et 0,1 mm, de préférence entre 5 mm et 1,5 mm, plus préférablement entre 5 mm et 3 mm.

9. Le snack alimentaire selon quelconque revendication précédente, dans lequel
la dimension d'au moins deux desdites macroparticules est supérieure ou égale à 2 mm, de préférence supérieure à ou égale à 3 mm.

10. Le snack alimentaire selon l'une quelconque des revendications 4 à 9, dans lequel lesdits légumes sont sélectionnés parmi les carottes, les brocolis, le chou-fleur, le céleri, les poivrons, les tomates, les courgettes, le potiron, les épinards, la betterave, les asperges, la fenouil, l'oignon, l'aubergine, les artichauts et leurs mélanges.

11. Le snack alimentaire selon l'une quelconque des revendications 4 à 9, dans lequel lesdits fruits sont sélectionnés parmi les pommes, les poires, le citron vert, le citron et les agrumes, les abricots, les pêches, les bananes, les cerises, le raisin, les fraises, les myrtilles, les mûres, les framboises, le melon, la pastèque, le cacao, le café et leurs mélanges.
